Europäisches Patentamt

European Patent Office

Office européen des brevets

(11) Publication number: **0 152 491**
**A1**

## (12) EUROPEAN PATENT APPLICATION

(21) Application number: 83307459.4

(22) Date of filing: 07.12.83

(51) Int. Cl.⁴: **C 08 J 9/40**, B 29 C 49/00

(43) Date of publication of application: 28.08.85
Bulletin 85/35

(84) Designated Contracting States: AT BE CH DE FR GB IT LI LU NL SE

(71) Applicant: **Bradbury, John Albert Avery, 14 Norleane Cresent, Runcorn Cheshire (GB)**

(72) Inventor: **Bradbury, John Albert Avery, 14 Norleane Cresent, Runcorn Cheshire (GB)**

(74) Representative: **Tunnicliffe, Peter Barry, Westfields House 5 Vincent Drive Lache Lane, Chester, CH4 7RQ (GB)**

(54) Composite foamed articles and process for their production.

(57) Composite materials made by impregnating an open-celled organic foam (flexible or non-flexible) with an aqueous suspension of an insoluble particulate solid additive to deposit the particles within the cells, and then drying, optionally with after-treatments e.g. surface-coating. Preferred foam is a rubber or polyurethane and preferred additives are layer-minerals, especially a vermiculite, montmorillonite or bentonite. Impregnation can be uniform or selectively localised, e.g. in surface zones. Properties obtainable include fire-retardancy and controlled rigidising or retained resiliency. Also process for making such products using a closed mould system in which the foamed material seals with the walls of the mould and allows differential pressures across the thickness of the foam (optionally produced by mould platen displacement) to assist impregnation, control penetration by the impregnant, and remove excess liquid. Useful for making fire-resistant upholstery materials, building insulation and fire barriers from polyurethanes, and fire-resistant tiles from partly expanded polystyrene beads.

COMPOSITE FOAMED ARTICLES AND PROCESS FOR THEIR PRODUCTION

INVENTOR:- J.A.A.BRADBURY.

This invention relates to composite foamed articles and methods for making them.

It is known to make a variety of foamed articles from organic materials, and that the properties of such products can be modified by incorporation of additives. In some instances the additives are especially desirable, for example to suppress flammability or combustibility of polyurethanes. There can be difficulties in incorporating such additives however, as the presence of additives can sometimes interfere with the foam-making process by which the articles are made.

I have now found that valuable composite foamed materials, comprising a foamed organic material and an additive, may be made very simply by a process which comprises taking a foamed organic material of open-cell structure and impregnating it with an aqueous suspension of an additive, and thereafter removing the water component of the aqueous suspension within the foamed material so that the suspended additive is deposited within the open-cell structure of the foamed material to form a composite of the foamed material and the additive.

The foamed organic material may be any such material in which the porosity is provided, wholly or partly, by pores which are of an open-cell structure, i.e. in which there is communication between a substantial proportion of the pores or cells. The invention is not applicable to foamed materials in which the pores are substantially all of closed structure, i.e. the pores are in the form of a multitude of separate, self-contained bubbles which do not communicate with each other.

For the purposes of this process, I include within the term "foamed organic material of open-celled structure" primarily those materials which by their method of production are formed directly with a true "open-celled structure". I also include those materials which, though initially formed by their method of production with a predominantly closed-cell structure, have been converted by a simple treatment so that some or all of the closed pores have ruptured and have become intercommunicating; an example of such a material is a closed-cell flexible foam which has been compressed sufficiently for the internal pressures so generated to rupture at least some of the closed cells and break down the walls of the cells so that they have become inter-communicating and rendered the material permeable. I specifically do not include within the term, however, any foamed material which has an inherently closed cell structure but has had the equivalent of open pores produced in it by means other than the rupture of closed cells; for example I specifically do not include materials made by adhesively combining particles or beads of a closed-cell structure material (for example foamed polystyrene beads) in a manner which leaves a series of inter-communicating channels between the beads or particles, which channels might be mistakenly regarded as an open-celled structure.

My invention may be put into effect in a variety of ways. In its simplest form, the foamed material may be dipped, immersed in or sprayed with an aqueous suspension of the impregnant until enough of the suspension (and therefore of the impregnant also) has been absorbed into the open-cell structure. This may be assisted by using means which apply force to move the suspension into the cells or pores. For example, if the foamed material is flexible, it may be squeezed and released (several times if desired) to expel air from the internal cells or pores and suck in aqueous suspension in the manner of a sponge. An alternative, which is more generally applicable as it does not depend upon flexibility of the foamed material, is to put the foamed material in a vacuum chamber and reduce the air pressure around it to sub-atmospheric before applying the aqueous suspension of impregnant to it; the adjustment of the air pressure back to atmospheric forces suspension into the pores, and this cycle of reduced pressure followed by increase of pressure may be repeated until the uptake of suspension is sufficient or appears to have reached its limit. The alternative of using direct pressure to force the suspension into the foamed material can also be used but is usually not quite as effective as the vacuum method, as the air trapped within the pores tends to become compressed and impede the entry of the suspension. In a mould (e.g. in a platen mould) in which sufficient pressure can be applied, and when the foamed material being treated is flexible or compressible, the pressure method can be very effective for forcing the suspension into the pores despite any air present.

A particularly useful process comprises taking the foamed material at a stage at which it has an open-celled porous structure, confining it in a mould so that there is substantially sealing contact with the mould around its periphery ("a peripheral seal") and so that there is a gap between the mould wall and the foamed material at a face of the foamed material on one side of the peripheral seal, injecting an aqueous suspension of the desired impregnant material into the said gap, then forcing the said suspension into the open pores of the foamed material by application of an appropriate pressure difference, and then removing the impregnated foamed material from the mould and drying it.

This method is especially applicable to the production of articles which are relatively thin, in relation to their overall size, and most of all to articles which are given a decorative, textured or otherwise selected final finish from contact with the mould. An example of such a product is a decorative tile (for

0152491

example a ceiling tile) but the invention is in no way limited to such specific articles.

This preferred method is described in more detail below.

Final drying of the impregnated foamed material may be carried out by conventional means, for example by heating it in an oven or in a stream of hot air, by dielectric heating, or by any other means or combination of means for promoting evaporation or removal of the water until a satisfactorily low level of residual water results.

The foamed organic materials which may be treated by the process of my invention may be of any kind provided that they have the requisite open-cell structure. Thus they may have resilient (flexible) or non-resilient (rigid or semi-rigid) properties, and may be thermoplastic or thermosetting in their mode of formation, or any combination thereof.

My process may also be applied with especial advantage to resilient foamed materials, for example cellular rubbers or foamed thermoset polymeric materials, for example polyurethanes, and the like. In these cases the procedure is essentially as described above but additional beneficial results may be obtained. Thus in particular the impregnation may result in imparting not only the properties inherent in the impregnant used but also a useful modification of the resilience or flexibility of the resilient foamed material. The impregnant can change the resilience to any desired extent (usually, but not necessarily, by making it stiffer or less resilient). This effect may be brought about substantially uniformly throughout the material, or selectively or progressively through it, or even concentrated selectively in localised areas for example at or near the article's surface. This enables my invention to be used by a manufacturer to produce a material in which the core portion retains its own normal mechanical and physical properties (for example flexibility) substantially undiminished while the surface or surface zones can be given modified properties, for example improved stiffness, wear-resistance or fire-resistance.

These variable effects may be achieved by appropriate choice of impregnants, and the methods of impregnation, as more fully described hereafter. In the extreme, my invention can be used to transform a resilient foamed material into a rigid or semi-rigid one.

The procedure may also be applied to a wide variety of other foamed organic materials and not only to those mentioned above, belonging to many chemical constitutions. For example they may be polyurethanes, polyesters, phenolic resins (e.g. phenol-formaldehyde resins), polyolefines (for example polyethylene, polypropylene), polyimides, polyvinyl chloride, polyvinyl carbazole, ureaformaldehyde products, acrylic polymers, and mixtures and combinations thereof.

The particulate inorganic material may be any one or more materials which are substantially insoluble in water, stable (for example thermally and hydrolytically) at ambient temperatures and temperatures at which the impregnated composite foamed material is to be used. Preferably, the inorganic material should be able to impart some desirable property to the foamed material though it may be an inert material added for purposes such as loading or "densifying" the foamed material. Especially useful impregnants are those which have a retarding or inhibiting effect on the melting, burning and/or vapourisation phenomena which so commonly occur when foamed materials are heated or ignited, and are a source of danger in their industrial use. Examples of suitable inorganic impregnant materials include carbonates, phosphates, silicates, fluorides and other salts of metals such as calcium, magnesium, aluminium and the like, metal oxides (for example silica, alumina, alumina tri-hydrate), cements, calcium sulphate, and mixtures and combinations thereof. I especially prefer that the impregnant is a layer mineral, for example a vermiculite, clay (e.g. ball clay, china clay, fireclay), montmorillonite/bentonite, kaolinite, sepiolite and mixtures thereof. These materials may be used if so desired in any processed or un-processed form, ranging between the natural materials (subjected to any desired grading, grinding, purification or separation procedures needed to bring them into a state of appropriate usefulness) to forms which have been made by modification of the natural structures (for example by heat or by chemical treatments) to render them more useful.

I especially prefer to use a layer mineral (especially a vermiculite) which has been chemically delaminated into extremely small, thin, plate-like particles known as lamellae. Methods for the preparation of these are well known in the art and are described for example in German Offenlegungschrift No. 2741859, in United Kingdom patent specifications Nos. 1016385, 1076786, 1119305 and 1585104, and by Baumeister and Hahn in "Micron" Vol.7, page 247 (1946). Minerals, for example montmorillonites, which have been subjected to ion-exchange treatments (for example to replace calcium ions by alkali metal ions, for example sodium ions) may also be used.

The particle size of the inorganic impregnant may vary considerably, but preferably should be smaller by orders of magnitude (e.g. one twentieth or even smaller) than the size of the cells of the foamed material, so that the particles can penetrate easily and well into the interior of the foamed material. A very suitable size for the particles is in the range 50 to 100 microns, and desirably the particles should be of a shape having a high aspect ratio. In the case of delaminated layer minerals, for example vermiculite, the use of lamellae as small as practicable is preferred, even smaller than the 50 to 100 microns indicated above, and having high aspect ratios which may be over 100:1 or even over 1000:1.

The aqueous suspension of the inorganic impregnant may be made in conventional fashion. The suspension may contain surfactants, dispersing agents and other conventional additives to disperse the particles and/or to inhibit the flocculation or breakdown of the suspension; such additives may be cationic, anionic or non-ionic in nature, and matched appropriately to the particles to be suspended and to the foamed material to be impregnated. The proportion of the solid particles of impregnant in the aqueous suspension may vary considerably; usually the main requirement is that the suspension should carry enough suspended solid to enable the desired amount to solid to be carried into the cells of the porous material and deposited there with minimum difficulty and the minimum amount of water (which needs to be removed later), balanced with the suspension itself having a thickness or viscosity which is not so high as to make the penetration of the suspension into the foamed material unduly slow, difficult or uneven. Convenient proportions may range widely, for example from 10% to 50% by weight of solids particles in the aqueous suspension used. In some cases, higher proportions of solid can be used if the suspension is still suitably fluid for use in the impregnation.

As indicated above, the extent of penetration of the impregnant into the open-cell structure may be through substantially the entire matrix of the foamed material, but when the fire protection or other effect provided by the impregnant is adequately achieved by a surface coating and/or limited penetration (for example to several cellular layers below the surface) this can be done by controlling the quantity of impregnant and the method of impregnation. The important feature, however, is that the solid impregnant should not lie entirely upon the surface as a surface coating but sufficient penetration into at least the outermost layers of cells of the foamed material should take place in order to provide a good anchor for the impregnant.

I find it advantageous that my process can be used to achieve graded or differential impregnation effects by using successive suspensions of different impregnants, so that one impregnant may become located in the core region of the foamed material (by injecting that one first) and another one may be predominantly located at or nearer to the surface zones (by injecting that one later). As an alternative to the technique of successive injections, some differentiation of the impregnation in different zones of the foamed material can be achieved by varying the size distribution of the impregnant particles so that some can penetrate deeply while others, being larger, cannot penetrate so far and consequently tend to concentrate at or near the surface.

In processing flexible foams, compressing the foam after impregnation and releasing the compression again (a procedure which may be carried out in one or more stages or repeated, as desired) before drying, can be used to assist distribution of the slurry (i.e. the suspension of solid particles) around the foam.

As a further feature of my invention to improve the products I also find it advantageous to provide a sufficient excess of the impregnant, above that required for the selected interstitial penetration, to provide a surface layer of concentrated particles of the impregnant material. This may serve as a further modification of the structure of the surface or even to provide a coating intended for more decorative or protective purposes. This may be done by making the main impregnation charge of suspension slightly less than that required to fill the voidage or interstitial volume of the matrix, assert the pressure differential so as to force the suspension into the matrix of the foamed material, and then inject a further charge of suspension (which need not be the same as the first suspension) into a gap made by "backing off" the mould components again, and then repeating the pressure differential stage  so as to force the second suspension into the surface of the foamed material.  By using an amount greater than is necessary to fill the remaining pores, the excess which does not penetrate will form a surface layer of slurry which, on drying, will become a surface coating on the face of the product held there by the "keying" effect of the partial penetration and of the partial commingling of the different impregnant layers.

The impregnant material may be organic in nature if desired, and mixtures of different impregnants (inorganic and organic) may be used if so desired.  Examples of organic impregnants include natural and/or synthetic organic polymers in the form of latices or dispersions in aqueous media, having particle sizes substantially as indicated above for inorganic impregnants.  Particular examples include polyvinyl chloride, acrylic, and polyolefine (for example polyisoprene) aqueous dispersions. These organic impregnants may be substantially stable polymers or curable polymers which may be "cured" (i.e. undergo further chemical reaction) under the influence of heat or other conventional agents, to achieve further modification of the bonding of the impregnant and/or the foamed material.  For example, waterproofing additives (conveniently in sol or suspension form) may be used.

If the suspensions of impregnants used in the process of my invention contain components which, though necessary for the formation and/or use of the impregnant suspension, are not desirable in the final composite impregnated foamed material (for example water-soluble materials, surfactants, colloids and the like) it may be desirable to carry out a final operation to remove them after the impregnant has been put in place. This may be done by careful washing with water (or an aqueous solution, if this contains no undesirable components), taking care that the washing operation does not also remove an undue amount of the impregnant. Washing may be carried out by feeding a suitably slow flow of water (usually unheated) into the inlet (feed) side of the mould system described above so that it runs through the pores of the foamed material and out through the outlet side of the mould system. Alternatively, the wash water may be kept on the inlet (feed) side of the mould system and used to wash away any aqueous solution or suspension which has not impregnated the foamed material or formed a suitable sedimentary coating on its surface. Such purging or cleaning may also need to be applied to the mould system itself, and possibly a drying operation also, if the presence of water, residual surfactants and the like from some stages of the process tend to interfere with satisfactory operation of the later stages.

When the foamed material has been impregnated and dried as described above, it may with advantage be given a final treatment so as to modify or enhance it still further. For example, it may be subjected to heat (especially within a mould) to harden the surface, integrate the impregnant and/or surface layer more closely with the foamed material (for example by partial fusion or by some form of physical or chemical bonding) or to complete the foaming process or modify the cellular structure of the foamed material if this has not already achieved its final form. In particular, such treatment may impart to the product the final aesthetic appearance desired for sale of the product.

Similarly, the article may be given an after-treatment to modify its properties still further or to adapt it for sale or use for particular purposes. This may be for example an after-coating treatment intended to colour, decorate or waterproof it, or to apply an adhesive coating or a protective coating (for example a detachable paper or plastic film coating) or any combination of these. The after-treatment may even be a physical treatment intended to improve the article's shape, texture or other properties.

The preferred method of impregnation is described as follows.

This preferred method for making composite foamed articles comprises taking a foamed organic material at a stage at which it has an open-celled porous structure, confining it in a mould so that there is substantially sealing contact with the mould around its periphery ("a peripheral seal") and so that there is a gap between the mould wall and the foamed material at a face of the foamed material on one side of the peripheral seal, injecting an aqueous suspension of the desired impregnant material into the said gap, then forcing the said suspension into the open pores of the foamed material by application of an appropriate pressure difference across the peripheral seal, and then removing the impregnated foamed material from the mould and drying it.

The method described is particularly useful for impregnating rigid foams, but for flexible foams it is preferable first to compress the foam in the mould to displace air from within it, and then to retract the mould platen (preferably not less than a distance corresponding to the original foam thickness) to create a vacuum or reduced pressure. The slurry (i.e. suspension of the particulate solid) is then admitted, and is drawn into the foam. If a coating is desired, "backing off" the mould platen to a controlled amount can be used to assist in achieving this.

My invention is especially applicable to the production of articles which are relatively thin, in relation to their overall size, and most of all to

- 12 -                                                    0152491

articles which are given a decorative, textured or otherwise selected final finish from contact with the mould.
An example of such a product is a decorative tile (for
example a ceiling tile) but the invention is in no way
limited to such specific articles.

The procedure of my invention can be carried out in a
variety of ways.  Firstly, foamed material with the open-
celled porous structure may be produced _in situ_ in the
mould or it may be made separately and transferred to the
mould for subjection to treatment according to the process
of the present invention.  If it is produced _in situ_ this
has the advantage of simplifying the overall procedure,
but care has to be taken to ensure that the desired open-
celled structure is produced;  this is a matter usually
settled easily by the experience and skill of the operator
or by the established results known to be achieved by the
process conditions used for the initial foam formation.
If the foamed material is made  separately, for example in
a block or sheet form, a piece to fit the mould may be cut
from the block or sheet and transferred to the mould.

I find that it is generally desirable for the foamed
material of open-celled structure to fit the closed mould
well (especially, but not only, at the periphery) so that
the impregnation can take place in a controlled fashion
and direction from a selected face of the article.  Otherwise,  it can  be  more  difficult  to  regulate  the
impregnation if the ingress of the impregnant can take
place  from  several  directions  or  if  the  rate  of
impregnation can vary because of uncertain or irregular
spaces between the mould and the foamed material within
it.  Consequently,  it is  very  convenient to  form  the
foamed material, with its desired open-cell structure, _in_
_situ_ within  the  mould  as  this  generally  simplifies
procedure and keeps down the number of operations.  If
this procedure produces a product which has the desired
open-cell structure throughout the body of the material but has a surface skin which is relatively impermeable, it may be convenient to open the mould and remove this skin or surface layer (for example with a knife blade or other convenient cutting or slicing device) to expose the open-cell structure beneath before proceeding to the impregnation step. When the foamed material to be impregnated has been made separately, it is particularly desirable to ensure that it fits the mould well, and this can be done by subjecting it, within the mould, to heat or pressure or such combination of these as will stabilise the foamed material within the mould and cause it to move (whether by expansion, contraction, relaxation, softening or whatever reason) sufficiently to fill the mould well and close up any undesirable spaces between the foamed material and the mould walls, and especially to form the peripheral seal.

When it has been established that the foamed material adequately fills the mould and the peripheral seal has been achieved, the gap between the mould wall and the foamed material which is required for the next step of the process of my invention may be formed by partial separation of the components of the mould. This operation is termed "backing off" the mould. The space formed in the mould can be determined with good accuracy by measurement or by predetermined setting of the extent of separation of the mould components.

The injection of the aqueous suspension of the desired impregnant material into this gap may then be carried out through suitable holes or channels serving as inlets into the mould system (i.e. in one or both of the mating components of the mould). This may be done in conventional manner, by preparing the suspension and then injecting it by pressure using suitable measuring devices, non-return valves and the like to ensure the delivery of the desired amount of the suspension and the avoidance of any premature settling-out of the impregnant from the suspension.    The quantity of the suspension used should normally be sufficient to fill substantially completely the gap within the mould, and the gap itself should normally be such as to be equivalent in volume to the total accessible voidage (i.e. the total volume of all the open cells within the foamed material which it is intended to fill with the suspension).    Lesser amounts of suspension, insufficient to fill the gap, will tend to leave part of the receptive surface uncovered or unimpregnated, and this is best avoided unless for some reason an uneven distribution of the impregnant is actually desired.    If incomplete impregnation of the foamed material is desired, for example impregnation only to a selected depth, then adjustment of the gap within the mould may be made so that it corresponds to the appropriate fraction of the total open-cell voidage of the foamed material.    The formation of the suspension and its injection into the gap should, for preference, avoid appreciable aeration of the suspension as the presence of air bubbles may cause undesirable separation of the suspension and consequent uneven impregnation.

The forcing of the impregnating suspension into the open-cell pores of the foamed material may be achieved in a variety of ways.    The pressure difference necessary to achieve it may be secured simply by closing the inlet (feed lines) for the impregnant suspension and then moving the mating components of the mould together so as to diminish the internal gap which now contains the impregnant suspension and thereby force the impregnant suspension into the open cells of the foamed material. This alone may be rather inefficient if the opposite side of the mould, remote from the impregnant suspension, is sealed because a back pressure will tend to build up and progressively impede the flow of the impregnant suspension as the mould components move towards each other, and the impregnant may tend to concentrate at the face of the

0152491

foamed material at which it enters.    More even impregnation throughout the mass of the foamed material may be achieved by providing drainage channels or outlets in the mould component on the remote side which can be opened to allow air and/or water and/or surplus suspension to escape as the closing of the mould components forces these through the foamed material.  Advantageously, the differential pressure across the foamed material may be increased, and the rate of flow of the impregnant suspension into the foamed material may be correspondingly increased by applying suction or vacuum to these drainage channels or outlets.   Usually, such suction or vacuum need not be applied after the foamed material has been fully impregnated, as evidenced by the emergence of surplus suspension through the outlet channels.

The resulting impregnated foamed material is thus effectively charged, to the extent of all or part of the open-cell voidage of the foamed material, with water and the impregnant, and may be removed from the mould and dried to remove the water and leave a dry composite impregnated article.  Such drying, which may be aided by heat or other conventional means, may often be inconveniently slow, so I prefer to assist the drying operation by one or more optional steps.  Thus, part of the water may be removed from the foam while it is still in the mould, to reduce the amount of drying subsequently requred.  In particular, the suction applied to the outlet channels of the mould may be continued, provided that this does not appear to be removing undue amounts of the impregnant and thereby depleting the desired degree of impregnation.   If the foamed material is resilient, then some of the water content can be expelled by compression of the foamed material.   This compression can be taken to whatever degree is acceptable;  for example it may be taken far enough to expel appreciable amounts of the water without expelling appreciable amounts of the impregnant,

0152491

or it may be taken only to such a degree of compression that the limits of resilience are not exceeded and the foamed material does not remain undesirably deformed when the compressive forces are released.   It is, of course, possible that some deformation may be acceptable or even desirable as part of the shaping process for the final product, and in such cases it is quite acceptable to compress the foamed material beyond its recovery limits so that, for example, a surface pattern or finish can be effectively embossed thereon.

The preferred method for carrying out the invention is illustrated but not limited by the accompanying drawings, which are not to scale but represent schematically the operations carried out to produce an article, for example a foamed composite ceiling tile.

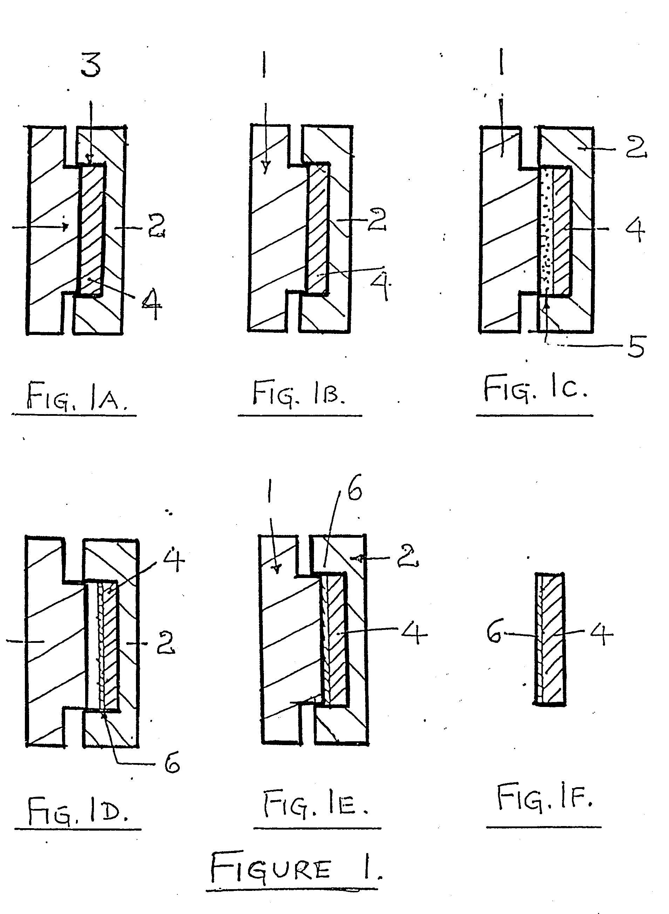

In Figure 1, the six illustrations labelled Fig.1A to Fig.1F represent the conventional "standard mould" process, adapted for the purposes of the present invention.   The numerals used to indicate parts have the same meaning in all Figures 1A to 1F.

The mould system comprises the two mould components - the male component (1) and the female component (2). Through an inlet channel (3) are fed the foamable polystyrene beads which are to be converted into the desired tile, so that they lie in the space between mould members (1) and (2).   Heat is then applied (by means not shown, but conventionally by steam heating) to one or both of the mould components (1) and (2) so that the enclosed polystyrene beads foam and turn into a foamed body (4). Cooling means (not shown, but conventionally a cold water supply) are then applied to mould component (1) and, if desired, to mould component (2) to cool and stabilise the foamed body (4) within.   The foamed body (4) is effectively the partly-made ceiling tile.   This heating step must be carried out using temperature, time and other relevant conditions to give a foamed product (4) having the high degree of interstitial porosity necessary for impregnation.  (See Fig 1A and Fig 1B).

The next step is to retract male component (1) to an extent necessary to leave a space between its inner face and the surface of the contained foamed body (4).  Into this space (5) is injected the requisite amount of impregnant suspension (for example an aqueous suspension of vermiculite particles) to fill the space (5) substantially completely  (See Figure 1C.).

Then suction is applied through channels (not shown) suitably placed in the female mould component (2) in the region remote from the space filled with the aqueous suspension (5), and the suspension is drawn into the cells of the foamed body (4).  This operation is usually carried out so as to fill substantially all the open cells of foamed body (4) but can if desired be adjusted to fill only a fraction of them.  Any surplus suspension which does not fully penetrate into the depths of foamed body (4) will form a surface layer of concentrated impregnant particles on the surface of the foamed body (4) or a highly concentrated impregnation layer on the surface at which the suspension enters (6).  (See Figure 1D).

The mould components (1) and (2) are then closed together, and pressure applied to force them together sufficiently to consolidate the composite mass of impregnant and foamed body.  This can be done cold, or with the application of heat, as  desired, to modify the structure of the foamed body (4) for example to achieve further foaming and cell modification, or to improve the surface finish and/or design on the on the foamed body's surface, or to assist in removing some of the water from the foam.  Further suction may be applied if desired to remove some of the contained water of the injected suspension.   (See Figure 1E).

Finally, the composite impregnated foamed article (See Figure 1F), in this particular instance the ceiling tile, may then be removed from the mould by conventional means, and a composite article comprising the impregnated foamed body (4) and optionally the surface layer (6) results. This can then be dried by convenient means (for example in an oven) not shown.

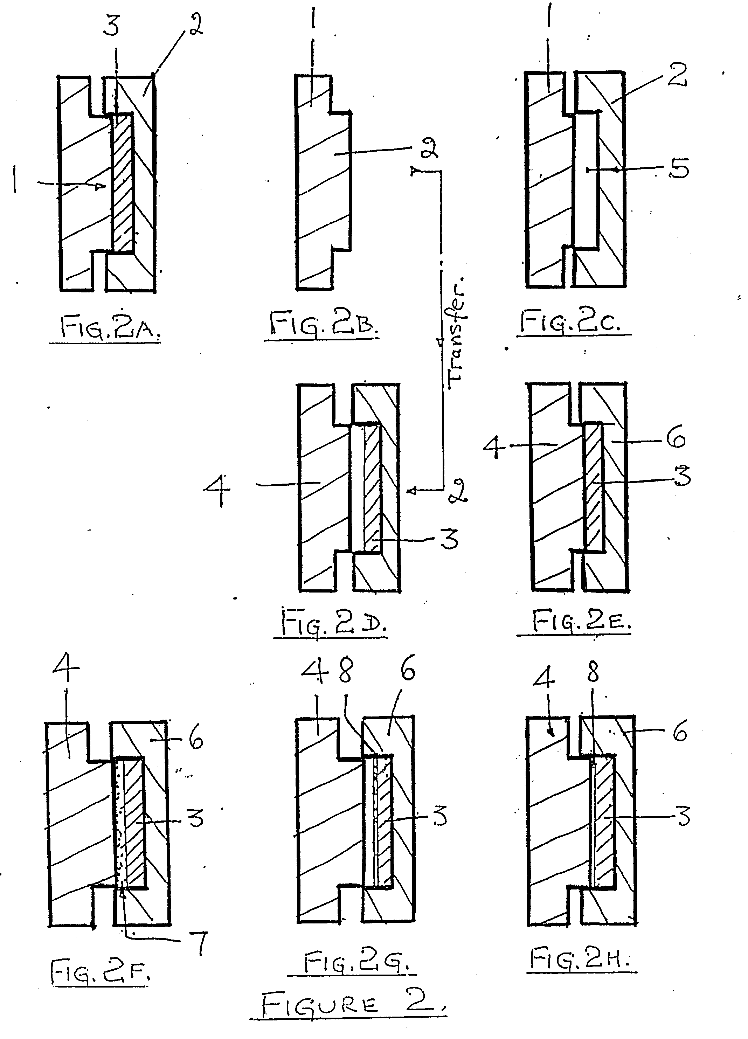

In Figure 2, the eight illustrations labelled Fig. 2A to Fig. 2H, represent the conventional transfer mould process adapted for the purposes of the present invention.

The mould system comprises the two mould components - the male mould component (1) and the female mould component (2) - with a foamed body (3) formed in the space between them in conventional manner, as described more fully above for Figure 1. (See Figure 2A).

The hot female component (2) with the contained hot foamed body (3) is then transferred away from the hot male mould component (1) to corresponding cold male mould component (4). The foamed body is then transferred to the cold male mould component (4), the hot female mould component (2) is then returned to the hot male mould component (1) so that recharging with foamable polystyrene beads and foaming in the mould can be repeated. At the same stage a facsimile female mould component, cold, (6) is brought together with the cold male mould component (4) and the contained foamed body (3), and the two mould components closed together to stabilise the foamed body by appropriate cooling. (See Figures 2B, 2C, 2D and 2E).

The procedure with the foamed body (3) now enclosed between cold mould components is continued as described above with reference to Figures 1C to 1F. (See Figures 2D to 2F). The male mould component (4) is retracted ("backed off") to the extent necessary to leave a space between it and the contained foamed body (3), and into this space (7) is injected the requisite amount of impregnant suspension (for example an aqueous suspension of vermiculite particles) to fill the space substantially completely. The suspension is then forced, by suction applied from the female mould section at the back of the foamed body (3) to draw the particles of impregnant into the pores of the foamed body, optionally also forming a surface layer or higher level concentration at or near the surface in a zone (8) in the manner more fully described for the process illustrated by Figure 1.   The mould components (4) and (6) may be closed together, with or without the application of heat, and dried by convenient conventional means.   The pair of mould components is then ready for re-use with the next formed foamed mass from moulds (1) and (2).

The product is found to be a very satisfactory decorative ceiling tile, which can be affixed in place by conventional means.   The impregnation with solid impregnant (in this particular example, vermiculite) imparts to the product the properties of fire-resistance, density and the like inherent from the characteristics the impregnant is known to give.   In addition, the procedure described above enables conventional moulding lines and moulding machinery to be used with no appreciable or expensive modification to produce impregnated composite tiles.   The "transfer moulding" technique has the known advantage of saving both energy and time in the heating and cooling cycles of moulding, and can be used with continued advantage and minimal disturbance.

Finally, the procedure of the present invention enables the formation, impregnation and surface finishing of the tile product to be achieved in a well integrated fashion with little or no disturbance of conventional procedures already established for currently producing non-impregnated products.   This greatly enhances the ease of securing the valuable advantages of impregnants in foamed plastic tiles in particular.

It should be appreciated that, while this description above relates in detail to selected or specified materials and to formation of foamed tiles, the invention is not so limited and may be applied far more extensively, as is discussed more fully above.

Throughout this description, the moulds are illustrated as being vertically disposed. This not essential, but is the conventional way in which commercial moulding machinery is often operated. For my invention, this disposition does not adversely affect operation as the steps are usually sufficiently speedy that the suspension of impregnant has little or no opportunity to settle out. However, if desired, the moulds may be used at any angle, ranging between the extremes of horizontal and vertical, as the operator desires and the actual disposition chosen appears in most cases to have little effect on the results obtained.

As a further feature of this invention it is to be understood that, for the purpose of this preferred impregnation technique within a mould, the term "foamed organic material of open-celled structure" INCLUDES materials which have an inherently closed cell structure but have had the equivalent of open pores produced in them by means other than the rupture of closed cells (for example materials made by adhesively combining particles or beads of a closed-cell structure material, of which a typical example is foamed polystyrene beads) in a manner which leaves a series of intercommunicating channels between the beads or particles, which channels can thus be regarded as an open-celled structure. This definition is used for the purposes of the preferred technique of impregnation, within a mould, even though the definition for the purposes of the above-described impregnation process in its more general sense expressly excludes them. The adhesive combination of the particles or beads may be achieved by any means, for example by use of added adhesive, partial melting or polymerisation reactions at the points of contact between them.

----- 0 -----

0152491
P.121.

# C L A I M S:-

1.    Process for making a composite foamed material which comprises impregnating a foamed organic material of open-cell structure (preferably a resilient foamed material) with an aqueous suspension of a particulate additive, preferably a layer mineral, and thereafter removing the water component of the aqueous suspension so that the suspended additive is deposited within the open-cell structure of the foamed material to form a composite of the foamed material and the additive.

2.    Process as claimed in Claim 1 wherein the particulate additive is a vermiculite (especially in a chemically delaminated form), montmorillonite or bentonite.

3.    Process as claimed in Claim 1 or Claim 2 wherein the foamed organic material of open-celled structure is a polyurethane.

4.    Process as claimed in any of Claims 1 to 3 wherein the particulate additive is concentrated selectively in localised areas for example near the surface of the foamed material, especially by using an excess of the additive, above that required for the interstitial penetration, to provide a coating comprising a surface layer of concentrated particles of the additive material or by compressing the wet foam to redistribute the particulate material with greater concentration nearer to the surface.

5.    Process as claimed in any of Claims 1 to 4 wherein the suspension of the additive contains from 10% to 50% by weight of solids.

6.    Process as claimed in any of Claims 1 to 5 wherein the foamed material which has been impregnated and dried is given a final treatment so as to modify or enhance it still further, for example a heating or after-coating treatment or a post-impregnation to provide waterproofing or enhance fire-retardancy.

7. Process for making composite foamed articles which comprises taking a foamed organic material at a stage at which it has an open-celled porous structure, and:-

(a) confining it in a mould so that there is substantially sealing contact with the mould around its periphery ("a peripheral seal")

(b) forming a gap between the mould wall and the foamed material at a face of the foamed material on one side of the peripheral seal,

(c) injecting an aqueous suspension of the impregnant material into the said gap,

(d) forcing the said suspension into the open pores of the foamed material by application of an appropriate pressure difference across the peripheral seal,

(e) optionally removing water from the foam while in the mould, partly or completely, as required,

(f) removing the impregnated foamed material from the mould and drying it.

8. Process as claimed in Claim 7 wherein, when it has been established that the peripheral seal has been formed,

(a) the gap between the mould wall and the foamed material is formed by partial separation of the components of the mould,

(b) the impregnating suspension is injected into the resulting gap, and

(c) the suspension is forced into the organic open-celled material by closing the inlet (feed lines) for the impregnant suspension and then moving the mating components of the mould together or by a pressure differential across the foam (an increased pressure on the inlet side and/or a decreased pressure on the opposite side)

9. Process as claimed in Claim 7 or 8 wherein the foamed material in the mould is produced there by feeding foam-forming components into the mould to produce the confined foam and establish the peripheral seal.

0152491
P.121.

10. Process as claimed in any of Claims 7 to 9 wherein the foamed organic material used has a basically closed-cell structure but also a multiplicity of inter-communicating interstitial gaps and spaces within it which can behave as the equivalent of an open-cell structured foam and be impregnated, for example by taking pre-foamed beads or fragments of a polymer (for example foamed polystyrene) and bonding them together so that, although they adhere to each other sufficiently to form a mass of some reasonable strength, the beads or fragments are not pressed completely together and residual interstitial gaps and spaces are left which intercommunicate sufficiently to give the mass a permeability similar to that of a true open-cell structure.

11. Composite foamed materials comprising an open-celled organic foamed material having a particulate inorganic material deposited within its pores to coat the inner surfaces of said pores.

----- O -----

0152491

1/2

Fig. 1A.   Fig. 1B.   Fig. 1C.

Fig. 1D.   Fig. 1E.   Fig. 1F.

FIGURE 1.

0152491

Fig.2A.

Fig.2B.

Transfer.

Fig.2c.

Fig.2D.

Fig.2E.

Fig.2F.

Fig.2G.

Fig.2H.

FIGURE 2.

European Patent
Office

**EUROPEAN SEARCH REPORT**

0152491
. Application number

EP  83 30 7459

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 471 296  (KURZ)<br>* Page 2, paragraph 3; page 5, paragraph 2; page 8, example 5; page 11, paragraph 2; page 12, paragraphs 1-3 * | 1,11 | C 08 J    9/40<br>B 29 C   49/00 |
| A |  | 3,4,6, 10 | |
| X | GB-A-1 469 407  (I.C.I.)<br>* Claim 1 * | 1,11 | |
| A | FR-A-2 140 076  (KRAUSS-MAFFEI)<br>* Page 2, line 35 - page 5, line 3 * | 7-9 | |
| A | GB-A-2 051 829  (GENERAL TYRE & RUBBER CO.)<br>* Page 2, lines 13-21 * | 7-9 | **TECHNICAL FIELDS SEARCHED (Int. Cl.4)** |
| A | GB-A- 990 198  (WITCO)<br>* Page 1, line 83; page 2, line 45; page 3, line 25 * | 1,5 | C 08 J<br>B 29 C |

The present search report has been drawn up for all claims

| Place of search | Date of completion of the search | Examiner |
|---|---|---|
| THE HAGUE | 08-08-1984 | ASHLEY G.W. |